(19) Europäisches Patentamt
European Patent Office
Office européen des brevets

(11) EP 1 887 065 B1

(12) **EUROPEAN PATENT SPECIFICATION**

(45) Date of publication and mention of the grant of the patent:
**10.11.2010 Bulletin 2010/45**

(51) Int Cl.:
***C09K 8/42*** *(2006.01)* ***C09K 8/467*** *(2006.01)*
***C04B 22/00*** *(2006.01)* ***C04B 28/00*** *(2006.01)*

(21) Application number: **06291275.3**

(22) Date of filing: **07.08.2006**

(54) **Geopolymer composition and application in oilfield industry**

Geopolymer Zusammensetzung and dessen Verwendung in Ölindustrie

Composition de géopolymère et son application dans l'industrie pétrolière

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietors:
- **Services Pétroliers Schlumberger**
  **75007 Paris (FR)**
  Designated Contracting States:
  **FR**
- **Schlumberger Technology B.V.**
  **2514 JG The Hague (NL)**
  Designated Contracting States:
  **BG CZ DE DK GR HU IE IT LT PL RO SI SK TR**
- **Schlumberger Holdings Limited**
  **Road Town, Tortola (VG)**
  Designated Contracting States:
  **GB NL**
- **PRAD Research and Development N.V.**
  **Willemstad, Curacao (AN)**
  Designated Contracting States:
  **AT BE CH CY EE ES FI IS LI LU LV MC PT SE**

(72) Inventors:
- **Barlet-Gouedard, Véronique**
  **92290 Chatenay Malabry (FR)**
- **Zusatz-Ayache, Bénedicte**
  **92290 Chatenay Malabry (FR)**
- **Porcherie, Olivier**
  **75012 Paris (FR)**

(74) Representative: **Vandermolen, Mathieu et al**
**Etudes et Productions Schlumberger**
**1, rue Henri Becquerel**
**B.P. 202**
**92142 Clamart Cedex (FR)**

(56) References cited:
**WO-A-91/13830**
**WO-A-2005/019130**
**US-A1- 2005 096 207**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 887 065 B1

## Description

### Field of the invention

The present invention broadly relates to well cementing. More particularly the invention relates to the use of geopolymers, to geopolymer slurry compositions and the related methods of placing the geopolymer composition in a well using conventional or unconventional cementing techniques.

### Description of the Prior Art

Geopolymers are a novel class of materials that are formed by chemical dissolution and subsequent recondensation of various aluminosilicate oxides and silicates to form an amorphous three-dimensional framework structure. Therefore, a geopolymer is a three-dimensional aluminosilicate mineral polymer. The term *geopolymer* was proposed and first used by J. Davidovits (Synthesis of new high-temperature geopolymers for reinforced plastics/composites, SPE PACTEC' 79, Society of Plastics Engineers) in 1976 at the IUPAC International Symposium on Macromolecules held in Stockholm.

Geopolymers based on alumino-silicates are designated as poly(sialate), which is an abbreviation for poly (silicon-oxo-aluminate) or $(\text{-Si-O-Al-O-})_n$ (with *n* being the degree of polymerization). The sialate network consists of $SiO_4$ and $AlO_4$ tetrahedra linked alternately by sharing all the oxygens, with $Al^{3+}$ and $Si^{4+}$ in IV-fold coordination with oxygen. Positive ions ($Na^+$, $K^+$, $Li^+$, $Ca^{2+}$...) must be present in the framework cavities to balance the negative charge of $Al^{3+}$ in IV-fold coordination.

The empirical formula of polysialates is: $M_n$ $\{-(SiO_2)_z-AlO_2\}_n$, w $H_2O$, wherein M is a cation such as potassium, sodium or calcium, n is a degree of polymerization and z is the atomic ratio Si/Al which may be 1, 2, 3 or more, until 35 as known today.

The three-dimensional network (3D) geopolymers are summarized in the table 1 below.

**Table 1 : Geopolymers chemical designation (wherein M is a cation such as potassium, sodium or calcium, and n is a degree of polymerization).**

| Si/Al ratio | Designation | Structure | Abbreviations |
|---|---|---|---|
| 1 | Poly(sialate) | $M_n(\text{-Si-O-Al-O-})_n$ | (M)-PS |
| 2 | Poly(sialate-siloxo) | $M_n(\text{-Si-O-Al-O-Si-O})_n$ | (M)-PSS |
| 3 | Poly(sialate-disiloxo) | $M_n(\text{-Si-O-Al-O-Si-O-Si-O-})_n$ | (M)-PSDS |

The properties and application fields of geopolymers will depend principally on their chemical structure, and more particularly on the atomic ratio of silicon versus aluminum. Geopolymers have been investigated for use in a number of applications, including as cementing systems within the construction industry, as refractory materials and as encapsulants for hazardous and radioactive waste streams. Geopolymers are also referenced as rapid setting and hardening materials. They exhibit superior hardness and chemical stability.

Various prior art disclose the use of geopolymer compositions in the construction industry. In particular US 4,509,985 discloses a mineral polymer composition employed for the making of cast or molded products at room temperatures, or temperatures generally up to 120°C; US 4,859,367, US 5,349,118 and US 5,539,140 disclose a geopolymer for solidifying and storing waste material in order to provide the waste material with a high stability over a very long time, comparable to certain archeological materials, those waste materials can be dangerous or potentially toxic for human beings and the natural environment; or US5,356,579, US5,788,762, US5,626,665, US5,635,292 US5,637,412 and US5,788,762 disclose cementitious systems with enhanced compressive strengths or low density for construction applications. Patent application W02005019130 is the first to highlight the problem of controlling the setting time of the geopolymer system in the construction industry. Effectively, as the geopolymers have a rapid set time, a retarder could be used to lengthen this set time.

However none of the prior art has discussed geopolymers for application in the oilfield industry. And if WO2005019130 has the merit to disclose a specific type of novel family of geopolymers with some retarding effects on the set time for the construction industry, no real control of the set time is proposed for all the other geopolymer systems. In addition further major technical challenges affect potential cementing systems to be used in the oilfield industry. These problems are, for example the control of the thickening and setting times for large temperature and density ranges for the geopolymer slurry, the mixability and also the pumpabilty of such slurry. Other properties have also to be considered, such as the compressive strength and permeability of the set geopolymer material. Therefore, it would be desirable to produce geopolymers solving those problems and having still good properties for oilfield applications.

**Summary of the invention**

In one embodiment the invention discloses a pumpable suspension for forming a geopolymeric composition in a borehole comprising an aluminosilicate source, a metal silicate, an alkali activator and a carrier fluid. All the four components do not need necessarily to be added separately: for example the alkali activator can be already within a carrier fluid. So, the aluminosilicate source can be in the form of a solid component; the metal silicate can be in the form of a solid or of a mix of metal silicate within a carrier fluid; the alkali activator can be in the form of a solid or of a mix of alkali activator within a carrier fluid. Importance is to have a carrier fluid to make suspension if aluminosilicate source, metal silicate and alkali activator are all in solid state. If aluminosilicate source, metal silicate are in solid state and alkali activator is in liquid state, alkali activator is considered to already have a carrier fluid within. Further, as it is understood, unicity of the carrier fluid is not required, two or more carrier fluids can be used. The geopolymeric composition has such rheological properties that the suspension of said geopolymeric composition has a good pumpability and stability. A pumpable composition in the oilfield industry has a rheology lesser than or equal to 300 cP, preferably in other embodiment lesser than or equal to 250 cP, more preferably in another embodiment lesser than or equal to 200 cP. Further, the suspension made is a stable suspension. The geopolymeric composition is mixable and pumpable; therefore applications in the oilfield industry are possible.

To control the setting time of the geopolymeric composition the alkali activator is chosen with a given pH, and/or a retarder is added and/or an accelerator is added to the suspension of said geopolymeric composition. The alkali activator can be generally an alkali metal hydroxide, more preferably a sodium or potassium hydroxide; it can be also a carbonate material. The retarder is selected from the group constituted of boron containing compound, lignosulfate, sodium gluconate, sodium glucoheptonate, tartaric acid and phosphorus containing compounds. Preferably, the retarder is an anhydrous or hydrated alkali metal borate or a pure oxide of boron. More preferably, the retarder is a sodium pentaborate decahydrate, boric acid, or borax. The accelerator is a lithium containing compound. Preferably the accelerator is a salt of lithium. More preferably, the accelerator is lithium chloride. The control of the setting time is here efficient from 20°C to 120°C. Sodium pentaborate decahydrate and borax are able to control setting time from 20°C, preferably from 25°C.

To control the density of the geopolymeric composition, a lightweight particle and/or a heavyweight material can be added to the suspension. The lightweight particles also called fillers are selected from the group constituted of cenospheres, sodium-calcium-borosilicate glass, and silica-alumina microspheres. The heavy particles also called the weighting agents are typically selected from the group constituted of: manganese tetroxide, iron oxide (hematite), barium sulfate (barite), silica and iron/titanium oxide (ilmenite). The geopolymeric compositions can also be foamed by foaming the suspension of said geopolymeric composition with a gas as for example air, nitrogen or carbon dioxide. The geopolymeric composition can further comprise a gas generating additive which will introduce the gas phase in the suspension. Preferably, the density of the suspension of said geopolymeric slurry compositions varies between 1 gram per cubic centimeter and 2.5 grams per cubic centimeter, more preferably between 1.2 grams per cubic centimeter and 1.8 grams per cubic centimeter.

In a second embodiment, the suspension of said geopolymeric composition can further comprise a mixture of two or more aluminosilicate source. In a further other embodiment, the suspension of said the geopolymeric composition can comprise a second binder component which may be a conventional cementing material such as Portland cement, micro-cement or silica fume.

In a third embodiment, the suspension of said geopolymeric composition can comprise a gas phase so the gas phase or part of the gas phase remains in the geopolymeric composition. For example, the gas phase can be a water-immiscible dispersed nitrogen phase.

In a fourth embodiment, the suspension of said geopolymeric composition can comprise a water-immiscible phase. For example, this can be a water-immiscible dispersed oil-based phase.

In a fifth embodiment, the suspension further comprises an additive selected from the group constituted of: an activator, an antifoam, a defoamer, silica, a fluid loss control additive, a flow enhancing agent, a dispersant, a rheology modifier, a foaming agent, a surfactant and an anti-settling additive.

The geopolymeric composition are preferably poly(sialate), poly(sialate-siloxo) or poly(sialate-disiloxo). More preferably, the geopolymeric composition are poly(sialate-siloxo) components and therefore the silicon to aluminum atomic ratio is substantially equal to two, between 1.8 and 2.2.

In another aspect of the invention the suspension comprises, a retarder and/or an accelerator and a carrier fluid wherein the suspension has a oxide molar ratio $M_2O/SiO_2$ is greater than 0.20 with M being the metal. Preferably, the oxide molar ratio $M_2O/SiO_2$ is greater than or equal to 0.27.

When the retarder is used, it is preferably a boron containing compound and the suspension of said geopolymeric composition has an oxide molar ratio $B_2O_3/H_2O$ of less than 0.03. More preferably, the geopolymeric slurry composition has an oxide molar ratio $B_2O_3/H_2O$ of less than or equal to 0.02.

When the accelerator is used, it is preferably a lithium containing compound and the suspension of said geopolymeric composition has an oxide molar ratio $Li_2O/H_2O$ of less than 0.2. More preferably, the geopolymeric slurry composition has an oxide molar ratio $Li_2O/H_2O$ of less than or equal to 0.1.

The suspension according to the invention uses aluminosilicate source which is selected from the group constituted of ASTM type C fly ash, ASTM type F fly ash, ground blast furnace slag, calcined clays, partially calcined clays (such as metakaolin), aluminium-containing silica fume, natural aluminosilicate, synthetic aluminosilicate glass powder, zeolite, scoria, allophone, bentonite and pumice. Preferably, the geopolymeric composition is made with metakaolin, ground granulated blast furnace slag and/or fly ash.

The suspension according to the invention uses a metal silicate, with the metal selected from the group constituted of lithium, sodium, potassium, rubidium and cesium. Preferably, the metal is sodium or potassium. In another embodiment, the metal silicates can be replaced by ammonium silicates. The metal silicate in another embodiment can be encapsulated.

The suspension according to the invention uses for the alkali activator, for example an alkali metal hydroxide. Preferably, the alkali metal hydroxide is sodium or potassium hydroxide. The alkali activator and/or the metal silicate and/or the carrier fluid may be encapsulated. Alkali carbonates can also be used as alkali activator. Also, the alkali activator in another embodiment can be encapsulated.

The suspension according to the invention uses for the carrier fluid preferably an aqueous solution such as fresh water.

Also described in a method to control the setting time of a geopolymeric composition for oilfield applications is disclosed. The method comprises the step of providing a suspension of the geopolymeric composition within a carrier fluid by adding: (i) a retarder and/or an accelerator; (ii) an aluminosilicate source; (iii) an alkali activator, and (iv) a metal silicate. The previous steps can be realized in another order. The geopolymer compositions prepared according to the method have controllable setting times at temperatures ranging from 20°C to at least 120°C. The geopolymeric composition used is the same as disclosed above. And, the alkali activator is selected from the group constituted of: sodium hydroxide and potassium hydroxide; the retarder is selected from the group constituted of boron containing compound, lignosulfate, sodium gluconate, sodium glucoheptonate, tartaric acid and phosphorus containing compounds.

To control the thickening and/or the setting times of the geopolymeric composition the nature and/or the pH and/or the concentration of the alkali activator is changed. By increasing the concentration of the alkali activator, the setting time is shortened and by changing the nature and/or pH, different setting times are obtained. To control the thickening time of the geopolymeric composition the nature and/or the concentration of the retarder is changed. By increasing the concentration of the retarder, the setting time is lengthened and by changing the nature, different setting times are obtained. In the same way, to control the setting time of the geopolymeric composition the nature and/or the concentration of the accelerator is changed. By increasing the concentration, the setting time is shortened and by changing the nature, different setting times are obtained. As it can be seen, three solutions exist to control the setting time, use of a special alkali activator, use of a retarder, or use of an accelerator. The three solutions can be used separately or in combination. Sometimes, the use of a special alkali activator does not give sufficiently long setting time and the use of a retarder may be preferred. Similarly the use of a special alkali activator may not give sufficiently short setting time and the use of an accelerator would be preferred.

Also described is a method to control the density of a geopolymeric composition for oilfield industry is disclosed. The method comprises the step of providing a suspension of the geopolymeric composition within a carrier fluid by adding: (i) lightweight particles and/or heavy particles; (ii) an aluminosilicate source; (iii) an alkali activator; and a metal silicate; (ii) an alkali activator and/or metal silicate; and (iii) an aluminosilicate source. The previous steps can be realized in another order. Still, the method further comprises the step of adding a retarder and/or an accelerator to she suspension. Still, the method further comprises the step of foaming the suspension of said geopolymeric composition.

Also described is a method to control the density of a geopolymeric composition for oilfield industry is disclosed, the method comprises the step of: (i) providing a suspension of said geopolymeric composition within a carrier fluid by mixing an aluminosilicate source, a metal silicate and an alkali activator in a carrier fluid, (ii) foaming the suspension of said geopolymeric composition. Still, the method further comprises the step of adding a retarder and/or an accelerator to the suspension.

The method to control the density of geopolymer compositions applies for density range varying between, 1 gram per cubic centimeter and 2 grams per cubic centimeter, but could also be applied to density range varying between 0.8 gram per cubic centimeter and 2.5 grams per cubic centimeter.

In another aspect of the invention a method to place a geopolymeric composition in a borehole and isolate subterranean formations is disclosed, the method comprises the step of: (i) providing a suspension of said geopolymeric composition as described above (ii) pumping the suspension of said geopolymeric composition into the borehole, and (iii) allowing the suspension of said geopolymeric composition to set and thereby form the geopolymeric composition.

In another embodiment, the step of providing a suspension of said geopolymeric composition further comprises adding a retarder and/or an accelerator. Effectively, it can be useful to lengthen the set of the geopolymeric composition by adding a retarder as seen above and/or it can be useful to accelerate the set of the geopolymeric composition by adding an accelerator as seen above.

Still, in another embodiment, the method comprises the step of activating in situ the suspension of said geopolymeric composition. Effectively, the method also applies if activation has to be realized downhole in the well, the activation does not necessarily refer to the alkali activator. Effectively, in a first embodiment the activation refers to activation via the alkali activator, the alkali activator is encapsulated as described previously or is released with a downhole device. In a second embodiment, the activation refers to any type of activation when various additives that need activation are used, as for example activation can be physical (by heat, UV radiation or other radiations); the activation can be made also with chemical components encapsulated and released at a predefined time or event. The capsule can be self destructed as previously explained or can be destroyed with help of stress and/or sonic perturbation.

In the first embodiment, the geopolymeric composition is retarded with a sufficiently long setting time so an activation has to be done to provoke the set of geopolymeric composition. The activation is made here by the release of an accelerator. This release is realized downhole, in situ, by adding the accelerator directly to the suspension of said geopolymeric composition and/or if the accelerator is encapsulated in the suspension of said geopolymeric composition by break of the capsules.

Still, in another embodiment, the method comprises the step of activating the suspension of said geopolymeric composition just before use. For example, an inactivated suspension of geopolymer composition is made so that said suspension is stable for a long time. Said composition is storable, transportable and accessorily perishable after a period varying between one day and some months, preferably some days and three months. The storable suspension is taken to rig site in liquid form and is activated before pumping or downhole in situ as explained previously.

Preferably, the step of pumping the suspension of said geopolymeric composition is made with conventional well cementing equipment, familiar to those skilled in the art. The method applies as a primary cementing technique for cementing wells where the geopolymeric composition is pumped down a pipe until the shoe where it then flows up the annular space between the casing/liner and the borehole. A reverse circulation cementing technique can also be used for placing the geopolymer suspension at the desired depth in the borehole.

Further, the pumping and placement of geopolymer suspension below surface encompasses several other conventional cementing techniques such as the grouting of platform piles, skirts or the like, the squeeze operation for repair or plugging of an undesired leak, perforation, formation or the like, and the setting of a geopolymer composition plug for any purpose of a cement plug.

**Brief description of the drawing**

Further embodiments of the present invention can be understood with the appended drawings:

- Figure 1 shows the impact of temperature on the thickening time of geopolymer formulations.
- Figure 2 shows the impact of accelerator addition on the thickening time of geopolymer formulations.

**Detailed description**

According to the invention, the geopolymer formulations involve the use of an aluminosilicate source, a metal silicate and an alkali activator in a carrier fluid at near-ambient temperature. The carrier fluid is preferably a fresh water solution. As it has been said previously, all the four components do not need necessarily to be added separately: for example the alkali activator can be already within water. So, the aluminosilicate source can be in the form of a solid component; the metal silicate can be in the form of a solid or of an aqueous solution of metal silicate; the alkali activator can be in the form of a solid or of an aqueous solution of alkali activator.

Formation of the geopolymer concrete involves an aluminosilicate source, which is also called aluminosilicate binder. Examples of aluminosilicate source from which geopolymers may be formed include ASTM type C fly ash, ASTM type F fly ash, ground blast furnace slag, calcined clays, partially calcined clays (such as metakaolin),, aluminium-containing silica fume, natural aluminosilicate, synthetic aluminosilicate glass powder, zeolite, scoria, allophone, bentonite and pumice. These materials contain a significant proportion of amorphous aluminosilicate phase, which reacts in strong alkali solutions. The preferred aluminosilicates are fly ash, metakaolin and blast furnace slag. Mixtures of two or more aluminosilicate sources may also be used if desired. In another embodiment, the aluminosilicate component comprises a first aluminosilicate binder and optionally one or more secondary binder components which may be chosen in the list: ground granulated blast furnace slag, Portland cement, kaolin, metakaolin or silica fume.

Formation of the geopolymer concrete involves also, an alkali activator. The alkali activator is generally an alkali metal hydroxide. Alkali metal hydroxides are generally preferred as sodium and potassium hydroxide. The metal hydroxide may be in the form of a solid or an aqueous mixture. Also, the alkali activator in another embodiment can be encapsulated. The alkali activator when in solid and/or liquid state can be trapped in a capsule that will break when subject for example, to stress on the capsule, to radiation on the capsule. Also, the alkali activator when in solid and/or liquid state can be trapped in a capsule that will naturally destroy due to the fact that for example, the capsule is made with biodegradable and/or self destructive material. Also, the alkali activator when in liquid state can be adsorbed onto a porous material and will be released after a certain time or due to a predefined event.

Formation of the geopolymer concrete involves also, a metal silicate. The metal silicate is generally an alkali metal silicate. Alkali metal silicates, particularly sodium silicate or potassium silicate, are preferred. Sodium silicates with a molar ratio of $SiO_2/Na_2O$ equal to or less than 3.2 are preferred. Potassium silicates with a molar ratio of $SiO_2/K_2O$ equal to or less than 3.2 are preferred. Also, the metal silicate in another embodiment can be encapsulated.

The method of the invention is applicable to the oilfield, preferably in completion of the well bore of oil or gas wells. To be used in oilfield application, a pumpable suspension is formed where the geopolymer blend is mixed with a carrier fluid. Various additives can be added to the suspension and the suspension is then pumped into the well bore. The suspension is then allowed to set up in the well to provide zonal isolation in the well bore.

***Method of placement of the geopolymer***

A typical property of geopolymer systems is their ability to set without delay after mixing. However for oilfield applications, mixable and pumpable geopolymer suspension is needed. For this reason, a way to retard the thickening of the geopolymer suspension or a way to control thickening times of the geopolymer is required.

A large family of retarders allowing delay in the set of the geopolymer has been found. In table 2, the results of thickening time tests performed as per ISO 10426-2 Recommended Practice in a High Pressure High Temperature (HPHT) consistometer are reported. Such tests are performed to simulate the placement from surface to downhole of cement suspensions, at a defined Bottom Hole Circulating Temperature (BHCT). To realize such tests, a temperature heatup schedule is followed in order to mimic placement in a real well. For the tests performed at 57°C, the temperature is reached in 41 minutes and the final pressure is 33.8 MPa (4900 psi). For the tests performed at 85°C, the temperature is reached in 58 minutes and the final pressure is 55.1 MPa (8000 psi). For the tests performed at 110°C, the temperature is reached in 74 minutes and the final pressure is 75.9 MPa (11000 psi).

**Table 2 : Examples of ISO10426-2 thickening time measured with HPHT consistometer (hours:min) obtained with different retarders at different temperature.**

| | Temperature (°C) | | 57 | 85 | | | 110 |
|---|---|---|---|---|---|---|---|
| | Sample | | A2 | A2 | B2 | C2 | D2 |
| Retarder | | %bwob (by weight of blend): | Thickening time: | | | | |
| | None | 0 | 6:25 | 0:53 | 0:37 | 5:45 | 1:40 |
| | $Na_2B_{10}O_{16}$, $10H_2O$ | 0.65 | | | | 6:30 | 3:00 |
| | | 1.3 | 23:52 | 6:08 | | | |
| | | 1.6 | | 7:30 | | | |
| | | 1.8 | | 10:39 | 9:51 | | |
| | | 2 | | 13:05 | | | |
| | | 2.6 | | 28:23 | | | |
| | $H_3BO_3$ | 1.9 | | 20:53 | | | |
| | Phosphonate/ sodium pentaborate | 1.2 | | | 7:00 | | |
| | Phosphonate/ phosphate salt | 6.4 | >15:00 | | | | |
| | Lignosulfonate | 1.51 | | 3:12 | | | |

■ Sample A2 is made by dissolving the retarder amount in 358 g of water, adding the blend comprising 314 g of metakaolin and 227 g of sodium disilicate in the solution under mixing, adding 17.2 g of sodium hydroxide under ISO 1026-2 mixing, pouring the suspension in HPHT cell. Sample A2 is then tested by measuring the thickening time with the HPHT consistometer.

■ Sample B2 is made by dissolving the retarder amount in 265 g of water, adding the blend comprising 232 g of metakaolin, 168 g of sodium disilicate and 414 g of silica particles as filler in the solution under mixing, adding 13 g of sodium hydroxide under ISO 10426-2 mixing, pouring the suspension in HPHT cell. Sample B2 is then tested by measuring the thickening time with the HPHT consistometer.

■ Sample C2 is made by dissolving the retarder amount in 422 g of sodium hydroxide solution, adding the blend comprising 440 g of type F fly ash and 88 g of sodium disilicate in the solution under mixing following ISO 10426-2 mixing, pouring the suspension in HPHT cell. Sample C2 is then tested by measuring the thickening time with the HPHT consistometer.

■ Sample D2 is made by dissolving the retarder amount in 374 mL of water, adding the blend comprising 411 g of type F fly ash and 82 g of sodium disilicate under mixing at 4000 rpm, adding 75 g of sodium hydroxide under ISO 10426-2 mixing, pouring the suspension in HPHT cell. Sample D2 is then tested by measuring the thickening time with the HPHT consistometer.

The retardation of geopolymeric formulations can be and is controlled at different BHCT by using either boron containing compounds as for example sodium pentaborate decahydrate, boric acid, borax, or lignosulphonate, or phosphorus containing compounds, or a mixture of them. Retardation of geopolymeric formulations will be sensitive to boron valence for boron containing compounds or phosphate valence for phosphorus containing compounds and/or to retarder concentration.

In table 3, the results obtained with Vicat apparatus with two boron-based retarders are presented. Vicat apparatus allows to measure when the setting of the material starts (IST) and ends (FST). It is based on the measurements of the penetration of a needle in a soft material. This apparatus is often used to realize pre-study at ambient temperature and atmospheric pressure.

**Table 3: Examples of initial setting time (hours:min) obtained with different retarders with Vicat apparatus at ambient temperature and atmospheric pressure.**

| Sample | A3 | B3 |
|---|---|---|
| No additive | 1:45 | 12:00 |
| $Na_2B_{10}O_{16}$ $10H_2O$<br>2.6 %bwob<br>5.2 %bwob | <br>3:00<br>4:10 | <br>-<br>>500:00 |
| Borax<br>4.2 %bwob | <br>3:20 | <br>- |

■ Sample A3 is made by dissolving the retarder amount in 139 g of sodium hydroxide solution, adding the blend comprising 105 g of metakaolin, 48 g of sodium metasilicate and 17 g of silica particles as filler in the solution under mixing. Sample A3 is then tested by pouring the suspension in a Vicat cell to measure setting time at 25°C.

■ Sample B3 is made by dissolving the retarder amount in 358 g of water, adding the blend comprising 314 g of metakaolin and 227 g of sodium disilicate in the solution under mixing, adding 17.2 g of sodium hydroxide under ISO 10426-2 mixing. Sample B3 is then tested by pouring the suspension in a Vicat cell to measure setting time at 25°C.

Retardation of geopolymeric formulations is sensitive to temperature. However, two boron-based retarders (sodium pentaborate decahydrate and borax) are able to strongly retard different types of geopolymer suspensions even at 25°C.

Figure 1 illustrates the impact of temperature on the thickening time for a geopolymer composition made by adding a blend comprising 411 g of type F fly ash and 82 g of sodium disilicate in 374 mL of water under mixing (retarder being predissolved in this water) and by adding 36.5 g of sodium hydroxide under ISO 10426-2 mixing. This way, retarders are efficient even at high temperature to control geopolymer suspension thickening time.

Control of the thickening time can also be realized by other means. As an example the nature of the alkali activator and its pH have an impact on the thickening time. Table 4 illustrates the influence of the alkali activator on the thickening time of geopolymeric suspensions. It demonstrates the ability to select the alkali activator source according to the downhole conditions.

**Table 4: Examples of ISO 10426-2 thickening time measured with HPHT consistometer (hours:min) with different alkali activators measured at 85°C.**

| Sample | A4 | B4 |
|---|---|---|
| 100 Bc | 0:53 | >31:00 |

■ Sample A4 is made by adding the blend comprising 314 g of metakaolin and 227 g of sodium disilicate in 358 g of water under mixing, adding 17.2 g of sodium hydroxide under ISO10426-2 mixing, pouring the suspension in HPHT cell. Sample A4 is then tested by measuring the thickening time with a HPHT consistometer.

■ Sample B4 is made by adding the blend comprising 314 g of metakaolin and 227 g of sodium disilicate in 357 g of water under mixing, adding 23.4 g of sodium bicarbonate under ISO 10426-2 mixing, pouring the suspension in HPHT cell. Sample A4 is then tested by measuring the thickening time with a HPHT consistometer.

Control of the thickening and setting times by these methods of retardation can also be efficiently done with geopolymer having different silicon versus aluminum ratio.

Furthermore, depending on properties of the geopolymer, it can be suitable to accelerate thickening of the suspension. Table 5 illustrates the accelerating effect of lithium compounds on the thickening time of geopolymeric suspensions at temperature of 85°C. It demonstrates the ability of using lithium salts to control the thickening time of geopolymer suspensions.

**Table 5: Examples of ISO 10426-2 thickening time measured with HPHT consistometer (hours:min) obtained with typ eF fly ashes and accelerators.**

| Sample | A5 | B5 |
|---|---|---|
| No additive | 22:57 | 5:21 |
| LiCl<br>3.5 %bwob<br>7 %bwob | <br>9:07<br>4:07 | - |
| LiOH, $H_2O$ 2 %bwob | - | 3:19 |

■ Sample A5 is made by adding the blend comprising 480 g of superfine typer F fly ash and 96 g of sodium disilicate in 406 g of the sodium hydroxide solution containing an accelerator following ISO 10426-2 mixing, pouring the suspension in HPHT cell. Sample A5 is then tested by measuring the thickening time with a HPHT consistometer.

■ Sample B5 is made by adding the blend comprising 442 g of standard type F fly ash and 88 g of sodium disilicate in 423 g of the sodium hydroxide solution containing an accelerator following ISO 10426-2 mixing, pouring the suspension in HPHT cell. Sample B5 is is then tested by measuring the thickening time with a HPHT consistometer.

Figure 2 illustrates the accelerating effect of lithium compounds on the thickening time for a geopolymer composition made by adding the blend comprising 480 g of superfine type F fly ash and 96 g of sodium disilicate in 406 g of the sodium hydroxide solution containing the accelerator following ISO 10426-2 mixing. The thickening time versus time of the suspension is then measured at temperature of 85°C. This way, accelerators such as lithium salts are shown to efficiently decrease the thickening time of geopolymer suspensions. The degree of acceleration of geopolymeric formulations is sensitive to accelerator type and/or concentration.

Depending on the properties of the geopolymer and on properties of the well, a real control of the thickening time of the suspension can be established. To increase the thickening time, nature of the retarder used can be changed, concentration of the retarder can be increased, nature of the alkali activator used can be changed, and nature of the aluminosilicate used can be changed.

Further, when use in oilfield application is sought, the geopolymer suspension has to be pumpable. Table 6 hereunder illustrates the rheological properties of geopolymer suspensions measured at a bottom hole circulating temperature (BHCT) of 60°C. Rheological values demonstrate the pumpability and the stability of geopolymeric suspensions for application in the oilfield industry.

**Table 6: ISO 10426-2 Rheological and stability measurements obtained with different examples.**

| Sample | A6 | B6 | C6 |
|---|---|---|---|
| PV/TY after mixing | 49/10 | 62/4 | 105/7 |
| ISO 10426-2 PV/TY at BHCT | 48/7 | 53/2 | 85/7 |
| ISO 10426-2 free fluid (mL) | 0 | 0 | 0 |

■ Sample A6 is made by adding the blend comprising 411 g of type F fly ash and 82 g of sodium disilicate in 374 mL of water under mixing, adding 75 g of sodium hydroxide under mixing. Sample A6 is then tested by measuring the rheological properties of the suspension after mixing and after conditioning at 60°C according to the ISO 1026-2 standard procedure.

■ Sample B6 is made by dissolving the 0.65 %bwob of sodiumpentaborate decahydrate in 422 g of sodium hydroxide solution, adding the blend comprising 440 g of type F fly ash and 88 g of sodium disilicate in the solution under ISO 10426-2 mixing, adding 36.5 g of sodium hydroxide under mixing. Sample B6 is then tested by measuring the rheological properties of the geopolymer suspension after mixing and after conditioning at 60°C according to the ISO 10426-2 standard procedure.

■ Sample C6 is made by adding the blend comprising 480 g of type F fly ash and 96 g of sodium disilicate in 406 g of the sodium hydroxide solution following ISO 10426-2 mixing conditions. Sample C6 is then tested by measuring the rheological properties of the suspension after mixing and after conditioning at 60°C according to the ISO 1-0426-2 standard procedure.

Table 7 shows the difference of setting time according to the conditions of setting. The geopolymer formulation will set more rapidly in static than in dynamic conditions. Also normally, the geopolymer suspension should set rapidly after placement.

**Table 7: Example comparing dynamic and static setting times (hours:min) at 85°C.**

| Sample | A7 | B7 |
|---|---|---|
| Additive | None | 2 %bwob LiOH, $H_2O$ |
| TT Test Pressure of 8000 psi / dynamic | 5:45 | 3:19 |
| Vicat test (samples oven cured) Atmospheric pressure / static | 2:30 | 1:50 |

■ Sample A7 is made by adding the blend comprising 440 g of type F fly ash and 88 g of sodium disilicate in 422 g of the water under mixing following ISO 10426-2 mixing, pouring the suspension in HPHT cell or the Vicat cell..

■ Sample B7 is made by adding the blend comprising 442 g of standard type F fly ash and 88 g of sodium disilicate in 424 g of the sodium hydroxide solution containing 2 %bwob LiOH, $H_2O$ following ISO 10426-2 mixing, pouring the suspension in HPHT consistometer or in the Vicat cell.

Also, when use in oilfield application is sought, the geopolymer suspension has to have a large range of densities. As presented in table 8, the tested geopolymer formulations propose a density range between 1.45 g/cm$^3$ [12.1 lbm/gal] up to 1.84 g/cm$^3$ [15.4 lbm/gal] either in reducing the water content, or in adding fillers.

**Table 8: Examples of suspension density obtained with some geopolymeric formulations.**

| Sample | A8 | B8 |
|---|---|---|
| Suspension density g/cm$^3$ (lbm/gal) | 1.84 (15.4) | 1.44 (12.06) |

■ Sample A8 is made by dissolving the retarder amount in 265 g of water, adding the blend comprising 232 g of metakaolin, 168 g of sodium disilicate and 414 g of silica particles as filler in the solution under mixing, adding 13 g of sodium hydroxide under ISO 10426-2 mixing.

■ Sample B8 is made by dissolving the retarder amount in 139 g of sodium hydroxide solution, adding the blend comprising 105 g of metakaolin, 48 g of sodium metasilicate and 17 g of silica particles as filler in the solution under mixing.

Further, to broaden the density range, either lightweight particles are added to reach lower densities or heavy particles to reach higher densities. The lightweight particles typically have density of less than 2 g/cm$^3$, and generally less than 1.3g/cm$^3$. By way of example, it is possible to use hollow microspheres, in particular of silico-aluminate, known as cenospheres, a residue that is obtained from burning coal and having a mean diameter of about 150 micrometers. It is also possible to use synthetic materials such as hollow glass bubbles, and more particularly preferred are bubbles of sodium-calcium-borosilicate glass presenting high compression strength or indeed microspheres of a ceramic, e.g. of the silica-alumina type. The lightweight particles can also be particles of a plastics material such as beads of polypropylene. The heavy particles typically have density of more than 2 g/cm$^3$, and generally more than 3 g/cm$^3$. By way of example, it is possible to use hematite, barite, ilmenite, silica and also manganese tetroxide commercially available under the trade names of MicroMax and MicroMax FF.

Further, to broaden the density range, it is possible to foam the geopolymer composition. The gas utilized to foam the composition can be air or nitrogen, nitrogen being the most preferred. The amount of gas present in the cement composition is that amount which is sufficient to form a foam having a density in the range of from about 1 g.cm$^{-3}$ to 1.7 g.cm$^{-3}$ (9 to 14 lbm/gal).

In a further embodiment, other additives can be used with the geopolymer according to the present invention. Additives known to those of ordinary skill in the art may be included in the geopolymer compositions of the present embodiments. Additives are typically blended with a base mix or may be added to the geopolymer suspension. An additive may comprise an activator, an antifoam, a defoamer, silica, a fluid loss control additive, a flow enhancing agent, a dispersant, an anti-settling additive or a combination thereof, for example. Selection of the type and amount of additive largely depends on the nature and composition of the set composition, and those of ordinary skill in the art will understand how to select a suitable type and amount of additive for compositions herein.

In another embodiment, when various components are used with or within the geopolymer formulation, the particle size of the components is selected and the respective proportion of particles fractions is optimized in order to have at the same time the highest Packing Volume Fraction (PVF) of the solid, and obtaining a mixable and pumpable slurry with the minimum amount of water, i.e., at slurry Solid Volume Fraction (SVF) of 35-75% and preferably of 50-60%. More details can be found in European patent EP 0 621 247. The following examples do not constitute a limit of the invention but rather indicate to those skilled in the art possible combinations of the particle size of the various components of the geopolymer compositions of the invention to make a stable and pumpable suspension.

The geopolymeric composition can be a "trimodal" combination of particles: "large" for example sand or crushed wastes (average dimension 100-1000 micrometers), "medium" for example materials of the type of glass beads or fillers (average dimension 10-100 micrometers), "fines" like for example a micromaterial, or micro fly ashes or other micro slags (average dimension 0.2-10 micrometers). The geopolymeric composition can also be a "tetramodal" combination of particles type: with "large" (average dimension about 200-350 micrometers), "medium" glass beads, or fillers (average dimension about 10 - 20 micrometers), "fine" (average dimension about 1 micrometer), "very fine" (average dimension about 0.1 - 0.15 micrometer). The geopolymeric composition can also be a further combinations between the further categories: "very large", for example glass maker sand, crushed wastes (average dimension superior to 1 millimeter) and/or "large", for example sand or crushed wastes (average dimension about 100-1000 micrometers) and/or "medium" like glass beads, or fillers, or crushed wastes (average dimension 10-100 micrometers) and "fine" like, for example, micro fly ashes or other micro slags (average dimension 0.2-10 micrometer) and/or "very fine" like, for example, a latex or pigments or polymer microgels like a usual fluid loss control agent (average dimension 0.05-0.5 micrometer) and/or "ultra fine" like some colloidal silica or alumina (average dimension 7-50 nanometers).

***Mechanical strength***

The compressive mechanical properties of set geopolymer compositions was studied using systems after curing them for several days under high pressure and temperature in high pressure and high temperature chambers to simulate the conditions encountered in an oil or gas well.
Table 9 and 10 illustrate that geopolymer formulations proposed by this invention exhibit acceptable compressive strengths with low Young Modulus for oilfield applications with or without retarder.

**Table 9: Mechanical properties measured after 7 days at 90°C - 20.7MPa (3000 psi)**

| Sample | A9 | A9 | B9 | B9 |
|---|---|---|---|---|
| Sodium pentaborate %bwob | 0 | 1.8 | 0 | 1.8 |
| Unconfined Compressive Strength (UCS) MPa | 19 | 14 | 15 | 13 |
| Young's modulus MPa | 2400 | 2100 | 2300 | 3000 |

■ Sample A9 is made by dissolving the retarder amount (if necessary) in 358 g of water, adding the blend comprising 314 g of metakaolin and 227 g of sodium disilicate in the solution under mixing, adding 17.2 g of sodium hydroxide under ISO 10426-2 mixing, pouring the suspension into moulds and placing the moulds in a curing chamber for 7 days at 90°C - 20.7 MPa [3000 psi] according to ISO 10426-2 procedure. Sample A9 is then tested by measuring the compressive strength and Young's modulus.

■ Sample B9 is made by dissolving the retarder amount (if necessary) in 265 g of water, adding the blend comprising 232 g of metakaolin, 168 g of sodium disilicate and 414 g of silica particles as filler in the solution under mixing, adding 13 g of sodium hydroxide under ISO 10426-2 mixing, pouring the suspension into moulds and placing the moulds in a curing chamber for 7 days at 90°C - 20.7 MPa [3000 psi] according to ISO 10426-2 procedure. Sample B9 is then tested by measuring the compressive strength and Young's modulus.

**Table 10: Mechanical properties measured after 21 days at 90°C - 20.7MPa (3000psi)**

| Sample | A10 | B10 | C10 |
|---|---|---|---|
| Lithium chloride %bwob | 0 | 3 | 7 |
| Unconfined Compressive Strength (UCS) MPa | 9.5 | 9.5 | 9 |
| Young's modulus MPa | 1750 | 2550 | 2950 |

■ Sample A10 is made by adding the blend comprising 482 g of standard type F fly ash and 96 g of sodium disilicate in 408 g of the sodium hydroxide solution containing the accelerator following ISO 10426-2 mixing, pouring the suspension into moulds and placing the moulds in a curing chamber for 21 days at 90°C - 20.7 MPa [3000 psi], according to ISO 10426-2 procedure. Sample A10 is then tested by measuring the compressive strength and Young's modulus.

■ Sample B10 is made by adding the blend comprising 442 g of standard type F fly ash and 88 g of sodium disilicate in 424 g of the sodium hydroxide solution containing 3 %bwob LiCl following ISO 10426-2 mixing, pouring the suspension into moulds and placing the moulds in a curing chamber for 21 days at 90°C - 20.7 MPa [3000 psi], according to ISO 10426-2 procedure. Sample B10 is then tested by measuring the compressive strength and Young's modulus.

■ Sample C10 is made by adding the blend comprising 480 g of superfine type F fly ash and 96 g of sodium disilicate in 406 g of the sodium hydroxide solution containing 7 %bwob LiCl following ISO 10426-2 mixing, pouring the suspension into moulds and placing the moulds in a curing chamber for 21 days at 90°C - 20.7 MPa [3000 psi], according to ISO 10426-2 procedure. Sample C10 is then tested by measuring the compressive strength and Young's modulus.

Because, the compositions of the present invention exhibit good compressive strengths with low Young modulus, they would be very useful in oilfield applications.

***Permeability properties***

The water permeability were measured for some prepared geopolymer compositions. The isolation properties of a set geopolymer was studied using systems which had passed several days under high pressure and temperature in high pressure and high temperature chambers to simulate the conditions encountered in an oil well.

Table 11 illustrates that geopolymer formulations proposed by this invention exhibit acceptable permeability for oilfield applications.

**Table 11: Water permability measured after curing at 90°C - 20.7MPa (3000psi)**

| Sample | A11 | B11 | C11 | D11 |
|---|---|---|---|---|
| Water permeability [mD] | 0.08 | < 0.008 | < 0.006 | < 0.006 |

■ Sample A11 is made by dissolving the retarder amount in 265g of water, adding the blend comprising 232g of metakaolin, 168g of sodium disilicate and 414g of silica particles as filler in the solution under mixing, adding 13g of sodium hydroxyde under API mixing, pouring the suspension in molds in a curing chamber for 7 days at 90°C - 3000psi according to API procedure. Water permeability of sample A11 is then measured on cylindrical core (1-inch diameter by 2-inches length).

■ Sample B11 is made by adding the blend comprising 482g of standard fly ash type F and 96g of sodium disilicate in 408g of the sodium hydroxide solution containing the accelerator following API mixing, pouring the suspension in molds in a curing chamber for 21 days at 90°C - 3000psi, according to API procedure. Water permeability of sample B11 is then measured on cylindrical core (1-inch diameter by 2-inches length).

■ Sample C11 is made by adding the blend comprising 442g of standard fly ash type F and 88g of sodium disilicate in 424g of the sodium hydroxide solution containing 3% bwob LiCl following API mixing, pouring the suspension in molds in a curing chamber for 21 days at 90°C - 3000psi, according to API procedure. Water permeability of sample C11 is then measured on cylindrical core (1-inch diameter by 2-inches length).

■ Sample D11 is made by adding the blend comprising 480g of superfine fly ash type F and 96g of sodium disilicate in 406g of the sodium hydroxide solution containing 7% bwob LiCl following API mixing, pouring the suspension in molds in a curing chamber for 21 days at 90°C - 3000psi, according to API procedure. Water permeability of sample D11 is then measured on cylindrical core (1-inch diameter by 2-inches length).

Because, the compositions of the present invention exhibit acceptable water permeability, oilfield applications are possible.

*Applications of the geopolymer*

The methods of the present invention are useful in completing well, such as for example oil and/or gas well, water well, geothermal well, acid gas well, carbon dioxide injection or production well and ordinary well. Placement of the geopolymer composition in the portion of the wellbore to be completed is accomplished by means that are well known in the art of wellbore cementing. The geopolymer composition is typically placed in a wellbore surrounding a casing to prevent vertical communication through the annulus between the casing and the wellbore or the casing and a larger casing. The geopolymer suspension is typically placed in a wellbore by circulation of the suspension down the inside of the casing, followed by a wiper plug and a nonsetting displacement fluid. The wiper plug is usually displaced to a collar, located near the bottom of the casing. The collar catches the wiper plug to prevent overdisplacement of the geopolymer composition and also minimizes the amount of the geopolymer composition left in the casing. The geopolymer suspension is circulated up the annulus surrounding the casing, where it is allowed to harden. The annulus could be between the casing and a larger casing or could be between the casing and the borehole. As in regular well cementing operations, such cementing operation with a geopolymer suspension may cover only a portion of the open hole, or more typically up to inside the next larger casing or sometimes up to surface. This method has been described for completion between formation and a casing, but can be used in any type of completion, for example with a liner, a slotted liner, a perforated tubular, an expandable tubular, a permeable tube and/or tube or tubing.

In the same way, the methods of the present invention are useful in completing well, such as for example oil and/or gas well, water well, geothermal well, acid gas well, carbon dioxide well and ordinary well, wherein placement of the geopolymer composition in the portion of the wellbore to be completed is accomplished by means that are well known in the art of wellbore reverse circulation cementing.

The geopolymer composition can also be used in squeeze job and/or in remedial job. The geopolymer material is forced through perforations or openings in the casing, whether these perforations or openings are made intentionally or not, to the formation and wellbore surrounding the casing to be repaired. Geopolymer material is placed in this manner to repair and seal poorly isolated wells, for example, when either the original cement or geopolymer material fails, or was not initially placed acceptably, or when a producing interval has to be shut off.

The geopolymer composition can also be used in abandonment and/or plugging job. The geopolymer material is used as a plug to shut off partially or totally a zone of the well. Geopolymer material plug is placed inside the well by means that are well known in the art of wellbore plug cementing.

The geopolymer composition can also be used in grouting job to complete a part of the annulus as described in Well Cementing from Erik B. Nelson. The geopolymer material is used to complete down this annulus. Geopolymer material is placed inside the well by means that are well known in the art of wellbore cementing.

The geopolymer composition can also be used for fast-setting operation, in-situ operation. Effectively, the geopolymer composition can have a setting time perfectly controlled, allowing an instant setting when desired. For example, a retarder/accelerator combination can be added to the geopolymer composition to cause the system to be retarded for an extended period of time and then to set upon addition of an accelerator.

According to other embodiments of the invention, the methods of completion described above can be used in combination with conventional cement completion.

***Examples - Geopolymer compositions***

The following examples will illustrate the practice of the present invention in its preferred embodiments.

*Example 1*

Geopolymer composition is made in the amounts by weight of the total dry components as follows: 58.1% metakaolin and 41.9% sodium disilicate. Dry components are mixed with the appropriate amount of water, sodium hydroxide and additives. The specific gravity of the suspension is 1.53 g/cm$^3$ [12.80 lbm/gal]. The geopolymer has the following oxide molar ratios:

$$SiO_2/Al_2O_3=4.00$$

$$Na_2O/SiO_2=0.27$$

$$Na_2O/Al_2O_3=1.07$$

$$H_2O/Na_2O=17.15$$

*Example 2*

Geopolymer composition is made in the amounts by weight of the total dry components as follows: 28.5% metakaolin, 20.6% sodium disilicate and 50.9% of a blend of silica particles. Dry components are mixed with the appropriate amount of water, sodium hydroxide and additives. The specific gravity of the suspension is 1.84 g/cm$^3$ [15.40 lbm/gal]. The geopolymer matrix has the following oxide molar ratios:

$$SiO_2/Al_2O_3=4.00$$

$$Na_2O/SiO_2=0.27$$

$$Na_2O/Al_2O_3=1.07$$

$$H_2O/Na_2O=17.15$$

*Example 3*

Geopolymer composition is made in the amounts by weight of the total dry components as follows: 35.2% metakaolin and 64.2% potassium disilicate. Dry components are mixed with the appropriate amount of water, potassium hydroxide and additives. The specific gravity of the suspension is 1.78 g/cm$^3$ [14.91 lbm/gal]. The geopolymer matrix has the following oxide molar ratios:

$$SiO_2/Al_2O_3=4.00$$

$$K_2O/SiO_2=0.27$$

$$K_2O/Al_2O_3=1.07$$

$$H_2O/K_2O=17.46$$

*Example 4*

Geopolymer composition is made in the amounts by weight of the total dry components as follows: 83.3% standard fly ash type F and 16.7% sodium disilicate. Dry components are mixed with the appropriate amount of water, sodium hydroxide and additives. The specific gravity of the suspension is 1.66 g/cm$^3$ [13.83 lbm/gal]. The geopolymer has the following oxide molar ratios:

$$SiO_2/Al_2O_3=4.00$$

$$Na_2O/SiO_2=0.27$$

$$Na_2O/Al_2O_3=1.08$$

$$H_2O/Na_2O=13.01$$

**Claims**

**1.** A method to place a geopolymeric composition in a borehole in a formation comprising the step of:

(i) providing a suspension of geopolymeric composition within a carrier fluid by mixing an aluminosilicate source, a metal silicate and an alkali activator to said suspension,
(ii) pumping the suspension of said geopolymeric composition into the borehole, and
(iii) allowing the suspension of said geopolymeric composition to set and thereby form the geopolymeric composition.

2. The method of claim 1, wherein the step of providing a suspension of said geopolymeric composition further comprises adding a retarder to control the thickening and/or the setting times of the suspension.

3. The method of claim 2 or 3, wherein the step of providing a suspension of said geopolymeric composition further comprises adding an accelerator to control the thickening and/or the setting times of the suspension.

4. The method according to any one of claims 1 to 3, further comprising the step of activating in situ the suspension of said geopolymeric composition.

5. The method according to any one of claims 1 to 4, wherein the step of pumping the suspension of said geopolymeric composition is made with conventional tools of well bore cementing.

6. The method according to any one of claims 1 to 5, wherein the method applies to the placement of the geopolymeric composition in an annular space between a casing and the borehole.

7. The method according to any one of claims 1 to 6, wherein the method applies to the placement of the geopolymeric composition through a hole made in a casing.

8. The method according to any one of claims 1 to 7, wherein the method applies to the placement of the geopolymeric composition to plug a zone of the borehole.

9. The method according to any one of claims 1 to 8 further comprising the step of adding light weight particles and/or heavy weight particles to the suspension to control the density of the composition.

10. The method according to any one of claims 1 to 9 further comprising the step of foaming the suspension to control the density of the composition.

11. The method according to any one of claims 9 or 10, wherein the density range of the suspension varies between 1 gram per cubic centimeter and 2.5 grams per cubic centimeter.

12. The method according to claim 2, wherein the retarder is selected from the group constituted of boron containing compound, lignosulfate, sodium gluconate, sodium glucoheptonate, tartaric acid and phosphorus containing compound, or a mixture of them.

13. The method according to claim 3, wherein the accelerator is a lithium containing compound.

14. The method according to claim 9, wherein the heavy particle are selected from the group constituted of manganese tetroxide, iron oxide (hematite), barium sulfate (barite), silica and iron/titanium oxide (ilmenite).

15. The method according to any of claims 1 to 14, further comprising a gas phase that is introduced by foaming the suspension of said geopolymeric composition with air, nitrogen or is introduced by the use of a gas generating additive.

16. The method according to any one of claims I to 15, further comprising a water-immiscible phase.

17. The method of claim 16, wherein the water immiscible phase is an oil-based phase.

18. The method according to any of the preceding claims, further comprising an additive selected from the group constituted of: an activator, an antifoam, a defoamer, silica, a fluid loss control additive, a flow enhancing agent, a dispersant, a rheology modifier, a foaming agent, a surfactant and an anti settling additive.

19. The method according to claims 2 and/or 3, wherein the suspension has a oxide molar ratio $M_2O/SiO_2$ greater than 0.20, wherein M is an alkali metal.

20. The method of claim 19, wherein the oxide molar ratio $M_2O/SiO_2$ is greater than or equal to 0.27.

21. The method according to claim 2, wherein the retarder is a boron containing compound and wherein the suspension has an oxide molar ratio $B_2O_3/H_2O$ of less than 0.03

**22.** The method of claim 21, wherein the oxide molar ratio $B_2O_3/H_2O$ is less than or equal to 0.02.

**23.** The method according to claim 1, wherein the silicon to aluminum atomic ratio is between 1.8 and 2.2.

**24.** The method of claim 23, wherein the silicon to aluminum atomic ratio is equal to two.

**25.** The method according to any one of claims 1 to 24, wherein the aluminosilicate source is selected from the group constituted of type C fly ash, type F fly ash, ground blast furnace slag, calcined clays, partially calcined clays (as metakaolin), aluminium-containing silica fume, natural aluminosilicate, synthetic aluminosilicate glass powder, zeolite, scoria, allophone, bentonite and pumice.

**26.** The method according to any one of claims 1 to 25, wherein the metal is selected from the group constituted of lithium, sodium, potassium, rubidium, and cesium.

**27.** The suspension according to any one of claims 1. to 26, wherein the alkali activator is an alkali metal hydroxide.

**28.** The method according to any one of claims 1 to 27, wherein the alkali activator and/or the carrier fluid is encapsulated.

**29.** The method according to any one of claims 1 to 27, wherein the metal silicate and/or the carrier fluid is encapsulated.

**Patentansprüche**

**1.** Verfahren zum Anordnen einer geopolymerischen Zusammensetzung in einem Bohrloch in einer Formation, das den folgenden Schritt umfasst:

(i) Bereitstellen einer Suspension einer geopolymerischen Zusammensetzung in einem Trägerfluid durch Mischen einer Aluminosilikat-Quelle, eines Metallsilikats und eines Alkaliaktivierers zu der Suspension;
(ii) Pumpen der Suspension der geopolymerischen Zusammensetzung in das Bohrloch; und
(iii) Zulassen, dass die Suspension der geopolymerischen Zusammensetzung abbindet und **dadurch** die geopolymerische Zusammensetzung bildet.

**2.** Verfahren nach Anspruch 1, wobei der Schritt des Vorsehens einer Suspension der geopolymerischen Zusammensetzung ferner das Hinzufügen eines Verzögerers umfasst, um die Eindickungs- und/oder Abbindezeiten der Suspension zu steuern.

**3.** Verfahren nach Anspruch 2 oder 3; wobei der Schritt des Vorsehens einer Suspension der geopolymerischen Zusammensetzung ferner das Hinzufügen eines Beschleunigers umfasst, um die Eindickungs- und/oder Abbindezeiten der Suspension zu steuern.

**4.** Verfahren nach einem der Ansprüche 1 bis 3, das ferner den Schritt des Aktivierens vor Ort der Suspension der geopolymerischen Zusammensetzung umfasst.

**5.** Verfahren nach einem der Ansprüche 1 bis 4, wobei der Schritt des Pumpens der Suspension der geopolymerischen Zusammensetzung mit herkömmlichen Werkzeugen zur Bohrlochzementierung ausgeführt wird.

**6.** Verfahren nach einem der Ansprüche 1 bis 5, wobei das Verfahren auf das Anordnen der geopolymerischen Zusammensetzung in einem Ringraum zwischen einem Futterrohr und dem Bohrloch angewendet wird.

**7.** Verfahren nach einem der Ansprüche 1 bis 6, wobei das Verfahren auf das Anordnen der geopolymerischen Zusammensetzung durch ein in einem Futterrohr hergestelltes Loch angewendet wird.

**8.** Verfahren nach einem der Ansprüche 1 bis 7, wobei das Verfahren auf das Anordnen der geopolymerischen Zusammensetzung, um eine Zone des Bohrlochs zu verstopfen, angewendet wird.

**9.** Verfahren nach einem der Ansprüche 1 bis 8, das ferner den Schritt des Hinzufügens von Partikeln mit geringem Gewicht und/oder von Partikeln mit hohem Gewicht zu der Suspension, um die Dichte der Zusammensetzung zu steuern, umfasst.

**10.** Verfahren nach einem der Ansprüche 1 bis 9, das ferner den Schritt des Aufschäumens der Suspension, um die Dichte der Zusammensetzung zu steuern, umfasst.

**11.** Verfahren nach einem der Ansprüche 9 oder 10, wobei der Dichtebereich der Suspension im Bereich von 1 Gramm pro Kubikzentimeter bis 2,5 Gramm pro Kubikzentimeter liegt.

**12.** Verfahren nach Anspruch 2, wobei der Verzögerer aus der Gruppe gewählt wird, die gebildet ist aus einer borhaltigen Verbindung, Lignosulfat, Natriumgluconat, Natriumglucoheptonat, Weinsäure und einer phosphorhaltigen Verbindung oder aus einem Gemisch hiervon.

**13.** Verfahren nach Anspruch 3, wobei der Beschleuniger eine lithiumhaltige Verbindung ist.

**14.** Verfahren nach Anspruch 9, wobei die schweren Partikel ausgewählt werden aus der Gruppe, die gebildet ist aus Mangantetroxid, Eisenoxid (Hematit), Bariumsulfat (Baryt), Siliciumoxid und Eisen-/Titanoxid (Ilemit).

**15.** Verfahren nach einem der Ansprüche 1 bis 14, das ferner eine Gasphase enthält, die durch Aufschäumen der Suspension der geopolymerischen Zusammensetzung mit Luft oder Stickstoff eingeleitet wird oder durch die Verwendung eines gaserzeugenden Additivs eingeleitet wird.

**16.** Verfahren nach einem der Ansprüche 1 bis 15, das ferner eine nicht mit Wasser vermischbare Phase enthält.

**17.** Verfahren nach Anspruch 16, wobei die nicht mit Wasser vermischbare Phase eine Phase auf Ölbasis ist.

**18.** Verfahren nach einem der vorhergehenden Ansprüche, das ferner ein Additiv enthält, das aus der Gruppe ausgewählt wird, die besteht aus: einem Aktivierer, einem Schaumverhinderungsmittel, einem Entschäumer, Siliciumoxid, einem Fluidverlust-Steuerungsadditiv, einem Strömungsverbesserungsmittel, einem Dispergenz, einem Rheologie-Modifizierer, einem Schäumungsmittel, einem Tensid und einem Abbindeverhinderungsadditiv.

**19.** Verfahren nach Anspruch 2 und/oder 3, wobei die Suspension ein Oxid-Molverhältnis $M_2O/SiO_2$ größer als 0,20 besitzt, wobei M ein Alkalimetall ist.

**20.** Verfahren nach Anspruch 19, wobei das Oxid-Molverhältnis $M_2O/SiO_2$ größer oder gleich 0,27 ist.

**21.** Verfahren nach Anspruch 2, wobei der Verzögerer eine borhaltige Verbindung ist und wobei die Suspension ein Oxid-Molverhältnis $B_2O_3/H_2O$ von weniger als 0,03 besitzt.

**22.** Verfahren nach Anspruch 21, wobei das Oxid-Molverhältnis $B_2O_3/H_2O$ kleiner oder gleich 0,02 ist.

**23.** Verfahren nach Anspruch 1, wobei das Silicium/Aluminium-Atomverhältnis im Bereich von 1,8 bis 2,2 liegt.

**24.** Verfahren nach Anspruch 23, wobei das Silicium/Aluminium-Atomverhältnis gleich zwei ist.

**25.** Verfahren nach einem der Ansprüche 1 bis 24, wobei die Aluminosilikat-Quelle ausgewählt wird aus der Gruppe, die gebildet ist aus Flugasche des C-Typs, Flugasche des F-Typs, Gebläseofen-Bodenschlacke, calcinierten Tonen, teilweise calcinierten Tonen (wie etwa Metakaolin), aluminiumhaltigem Siliciumoxidrauch, natürlichem Aluminosilikat, künstlichem Aluminosilikat, Glaspulver, Zeolith, Schlacke, Allophan, Bentonit und Naturbims.

**26.** Verfahren nach einem der Ansprüche 1 bis 25, wobei das Metall gewählt ist aus der Gruppe, die gebildet ist aus Lithium, Natrium, Kalium, Rubidium und Cäsium.

**27.** Suspension nach einem der Ansprüche 1 bis 26, wobei der Alkaliaktivierer ein Alkalimetallhydroxid ist.

**28.** Verfahren nach einem der Ansprüche 1 bis 27, wobei der Alkaliaktivierer und/oder das Trägerfluid eingekapselt sind.

**29.** Verfahren nach einem der Ansprüche 1 bis 27, wobei das Metallsilikat und/oder das Trägerfluid eingekapselt sind.

**Revendications**

1. Procédé pour placer une composition géopolymère dans un trou de forage dans une formation, comprenant les étapes consistant :

   (i) à fournir une suspension de composition géopolymère à l'intérieur d'un fluide support en mélangeant une source d'aluminosilicate, un silicate de métal et un activateur alcalin avec ladite suspension,
   (ii) à pomper la suspension de ladite composition géopolymère dans le trou de forage, et
   (iii) à laisser la suspension de ladite composition géopolymère prendre et former ainsi la composition géopolymère.

2. Procédé selon la revendication 1, dans lequel l'étape consistant à fournir une suspension de ladite composition géopolymère comprend en outre l'addition d'un retardateur pour contrôler les temps d'épaississement et/ou de prise de la suspension.

3. Procédé selon la revendication 2 ou 3, dans lequel l'étape consistant à fournir une suspension de ladite composition géopolymère comprend en outre l'addition d'un accélérateur pour contrôler les temps d'épaississement et/ou de prise de la suspension.

4. Procédé selon l'une quelconque des revendications 1 à 3, comprenant en outre l'étape consistant à activer *in situ* la suspension de ladite composition géopolymère.

5. Procédé selon l'une quelconque des revendications 1 à 4, dans lequel l'étape consistant à pomper la suspension de ladite composition géopolymère est réalisée avec les outils classiques de cimentation des puits de forage.

6. Procédé selon l'une quelconque des revendications 1 à 5, lequel procédé s'applique au placement de la composition géopolymère dans un espace annulaire entre un cuvelage et un trou de forage.

7. Procédé selon l'une quelconque des revendications 1, à 6, lequel procédé s'applique au placement de la composition géopolymère à travers un trou fait dans un cuvelage.

8. Procédé selon l'une quelconque des revendications 1 à 7, lequel procédé s'applique au placement de la composition géopolymère pour boucher une zone du trou de forage.

9. Procédé selon l'une quelconque des revendications 1 à 8, comprenant en outre l'étape consistant à ajouter des particules de poids léger et/ou des particules de poids lourd à la suspension pour contrôler la masse volumique de la composition.

10. Procédé selon l'une quelconque des revendications 1 à 9, comprenant en outre l'étape consistant à faire mousser la suspension pour contrôler la masse volumique de la composition.

11. Procédé selon l'une quelconque des revendications 9 ou 10, dans lequel la gamme de masse volumique de la suspension varie entre 1 gramme par centimètre cube et 2,5 grammes par centimètre cube.

12. Procédé selon la revendication 2, dans lequel le retardateur est choisi dans le groupe constitué par un composé contenant du bore, un lignosulfate, le gluconate de sodium, le glucoheptonate de sodium, l'acide tartrique et un composé contenant du phoshpore, ou un mélange de ceux-ci.

13. Procédé selon la revendication 3, dans lequel l'accélérateur est un composé contenant du lithium.

14. Procédé selon la revendication 9, dans lequel les particules lourdes sont choisies dans le groupe constitué par le tétroxyde de manganèse, l'oxyde de fer (hématite), le sulfate de baryum (barytine), la silice et l'oxyde de fer/titane (ilménite).

15. Procédé selon l'une quelconque des revendications 1 à 14, comprenant en outre une phase gazeuse qui est introduite en faisant mousser la suspension de ladite composition géopolymère avec de l'air, de l'azote ou qui est introduite en utilisant un additif générateur de gaz.

16. Procédé selon l'une quelconque des revendications 1 à 15, comprenant en outre une phase immiscible à l'eau.

17. Procédé selon la revendication 16, dans lequel la phase immiscible à l'eau est une phase huileuse.

18. Procédé selon l'une quelconque des revendications précédentes, comprenant en outre un additif choisi dans le groupe constitué par : un activateur, un antimousse, un démoussant, la silice, un additif de contrôle de perte de fluide, un agent activant l'écoulement, un dispersant, un modificateur de rhéologie, un agent moussant, un agent tensioactif et un additif de suspension.

19. Procédé selon les revendications 2 et/ou 3, dans lequel la suspension a un rapport molaire des oxydes $M_2O/SiO_2$ supérieur à 0,20, dans lequel M est un métal alcalin.

20. Procédé selon la revendication 19, dans lequel le rapport molaire des oxydes $M_2O/SiO_2$ est supérieur ou égal à 0,27.

21. Procédé selon la revendication 2, dans lequel le retardateur est un composé contenant du bore et dans lequel la suspension a un rapport molaire des oxydes $B_2O_3/H_2O$ inférieur à 0,03.

22. Procédé selon la revendication 21, dans lequel le rapport molaire des oxydes $B_2O_3/H_2O$ est inférieur ou égal à 0,02.

23. Procédé selon la revendication 1, dans lequel le rapport atomique du silicium à l'aluminium est entre 1,8 et 2,2.

24. Procédé selon la revendication 23, dans lequel le rapport atomique du silicium à l'aluminium est égal à deux.

25. Procédé selon l'une quelconque des revendications 1 à 24, dans lequel la source d'aluminosilicate est choisie dans le groupe constitué par une cendre volante de type C, une cendre volante de type F, un laitier de haut fourneau broyé, les argiles calcinées, les argiles partiellement calcinées (comme le métakaolin), une fumée de silice contenant de l'aluminium, un aluminosilicate naturel, un aluminosilicate synthétique, une poudre de verre, une zéolite, une scorie, l'allophone, la bentonite et la pierre ponce.

26. Procédé selon l'une quelconque des revendications 1 à 25, dans lequel le métal est choisi dans le groupe constitué par le lithium, le sodium, le potassium, le rubidium et le césium.

27. Suspension selon l'une quelconque des revendications 1 à 26, dans laquelle l'activateur alcalin est un hydroxyde de métal alcalin.

28. Procédé selon l'une quelconque des revendications 1 à 27, dans lequel l'activateur alcalin et/ou le fluide support est encapsulé.

29. Procédé selon l'une quelconque des revendications 1 à 27, dans lequel le silicate de métal et/ou le fluide support est encapsulé.

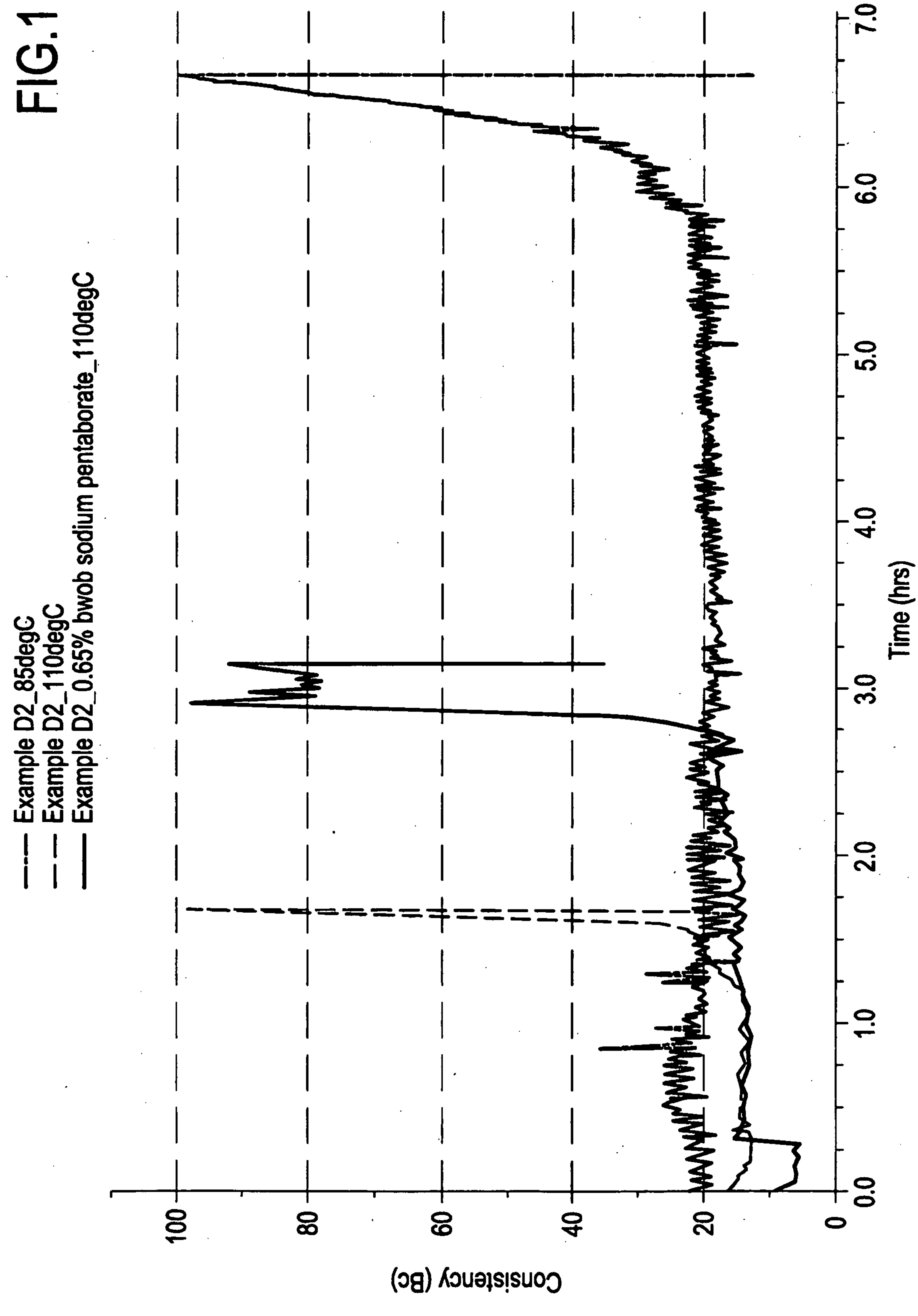
Example D2_85degC
Example D2_110degC
Example D2_0.65% bwob sodium pentaborate_110degC
Consistency (Bc)
0
20
40
60
80
100
Time (hrs)
0.0
1.0
2.0
3.0
4.0
5.0
6.0
7.0

FIG.1

FIG.2

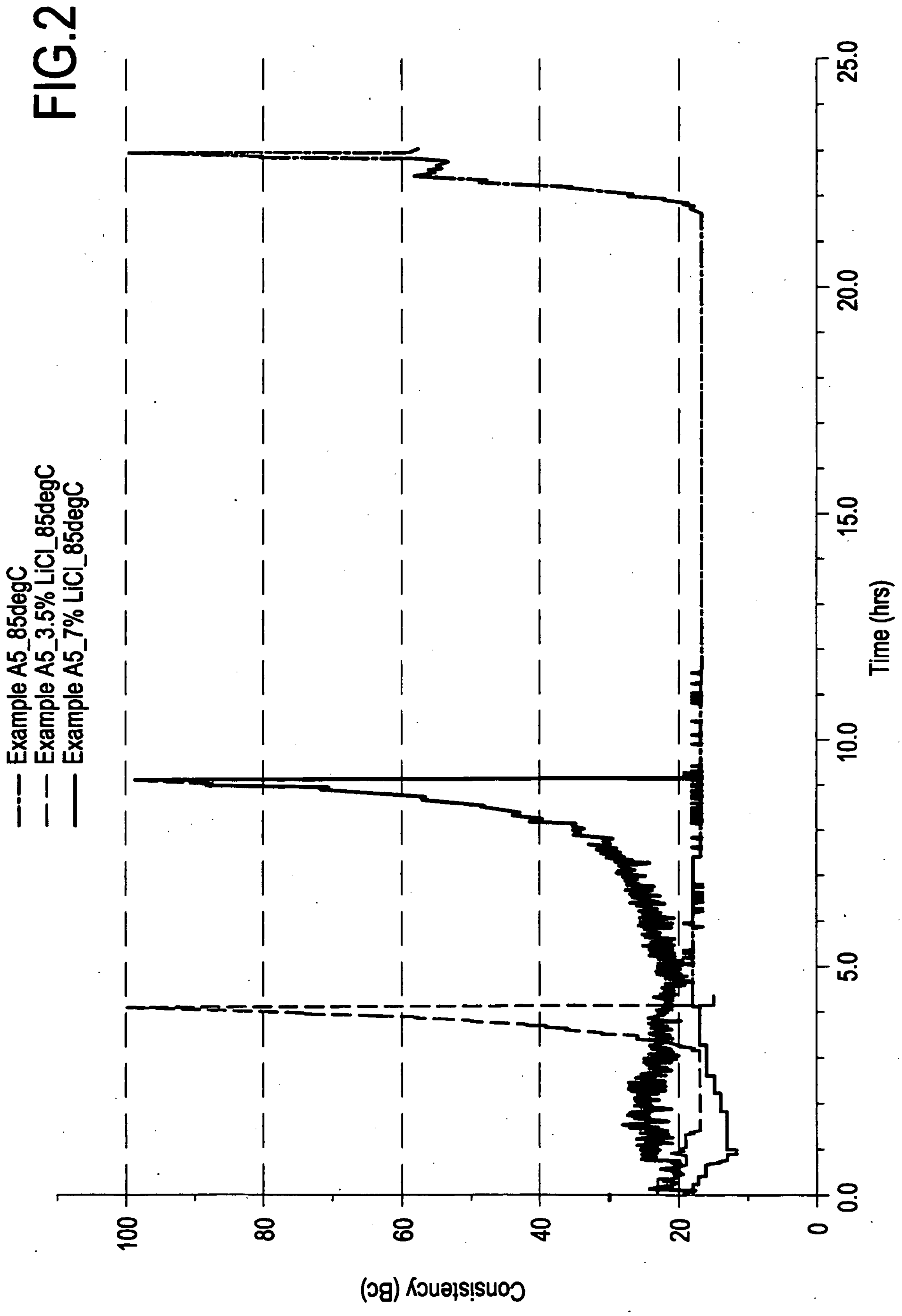
Example A5_85degC
Example A5_3.5% LiCl_85degC
Example A5_7% LiCl_85degC
Consistency (Bc)
0
20
40
60
80
100
Time (hrs)
0.0
5.0
10.0
15.0
20.0
25.0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4509985 A
- US 4859367 A
- US 5349118 A
- US 5539140 A
- US 5356579 A
- US 5788762 A
- US 5626665 A
- US 5635292 A
- US 5637412 A
- WO 2005019130 A
- EP 0621247 A


### Non-patent literature cited in the description


- Synthesis of new high-temperature geopolymers for reinforced plastics/composites. **J. DAVIDOVITS.** SPE PACTEC' 79. Society of Plastics Engineers, 1976